# EUROPEAN PATENT SPECIFICATION

(11) **EP 1 407 630 B1**
(45) Date of publication and mention of the grant of the patent: **19.09.2007**
(21) Application number: 01950136.0
(22) Date of filing: 04.07.2001
(51) Int. Cl.: H04Q 7/38

(54) **RESOURCE ALLOCATION METHOD AND ARRANGEMENT IN A RADIO ACCESS NETWORK**
BETRIEBSMITTELZUTEILUNGSVERFAHREN UND ANORDNUNG IN EINEM FUNKZUGRIFFSNETZWERK
PROCEDE ET SYSTEME D'ATTRIBUTION DE RESSOURCES DANS UN RESEAU D'ACCES RADIO

(43) Date of publication of application: 14.04.2004
(73) Proprietor: TELEFONAKTIEBOLAGET LM ERICSSON (publ), 164 83 Stockholm (SE)
(72) Inventor: ANDERSSON, Rutger, S-164 31 Kista (SE); LUNDBÄCK, Robert, S-165 77 Hässelby (SE); RONKAINEN, Henrik, S-169 71 Solna (SE)
(74) Representative: Kühn, Friedrich Heinrich
(86) International application number: PCT/SE2001/001554
(87) International publication number: WO 2003/005760

(56) References cited:
- WO-A1-97/12492
- WO-A1-99/03289
- WO-A1-99/20069
- US-A- 6 055 437

## Description

### TECHNICAL FIELD OF THE INVENTION

The invention relates to a method of resource allocation in a radio access network as well as an apparatus for resource allocation and a radio network controller and a radio access network including such an apparatus for resource allocation. More in particular, the invention relates to how allocation of resources supporting dedicated control channels are performed in the radio access network.

### DESCRIPTION OF RELATED ART

Typically wireless communication systems provides different types of radio communication channel configurations for supporting radio communication between a radio communication network, such as a cellular radio communication network, and user equipment, often referred to as mobile stations.

Before communication between the radio comunication network and a mobile station may occur on a radio communication channel, resources must be allocated in the cellular radio communication network for supporting the radio communication channel.

U.S. Patent 4,159,851 teaches a wireless communication system and a method for dynamically allocating communication resources in the communication system. The disclosed system is a TDMA-based system in which the available time slots all are preconfigured as primary control channels, dedicated control channels and traffic channels. In a situation where there is at least one pending call request but no available traffic channels, an attempt is made to create an additional traffic channel for serving the pending call request by combining two control channels having a valid traffic channel interleave distance relative to each other.

Ericssons CME20 system for GSM provides a feature called "Adaptive configuration of logical channels" which is designed to optimize the traffic and signalling channel usage and make Stand-alone Dedicated Control Channel (SDCCH) dimensioning less critical. In GSM, SDCCH subchannels are assigned to GSM mobile stations e.g. when a mobile station needs to notify the network about its location and status or when it sends or receives a point-to-point SMS-message. In GSM, SDCCH subchannels are configured together on a basic physical channel, i.e. a time slot, either as eight SDCCH subchannels, or four SDCCH subchannels combined with the Broadcast Control Channel (BCCH) and Common Control Channel (CCCH). These different SDCCH configurations are referred to as an SDCCH/8 and an SDCCH/4 respectively. Operation and maintenance personel specifies a basic configuration of SDCCH/8s in a cell. The "Adaptive configuration of logical channels" feature will dynamically dimension a cell with more (or less) SDCCH/8s depending on the demand for signalling channels in the cell. Should an increased demand for signalling channels arise, the feature will dynamically replace one idle Traffic Channel (TCH) in the cell with an SDCCH/8. When the demand for signalling channels decreases, the feature will strive to reconfigure back to the basic SDCCH configuration by reconfiguring SDCCH/8s to TCHs. Still, even though the feature provides for dynamic reconfiguration of idle TCHs to SDCCH/8s, situations may arise where a request for an SDCCH subchannel can not be served due to lack of available SDCCH subchannels. This situation may arise either due to an ongoing reconfiguration of an idle TCH to an SDCCH/8 not having been completed or that no new SDCCH/8 is allowed to be configured for the cell. In a situation of SDCCH congestion, an idle TCH may be assigned instead of a SDCCH subchannel for signalling.

Thus, in both the system disclosed in U.S. 4,159,851 and the CME20 system, network resources are organized in resource pools where the resources in each resource pool are reserved and preconfigured for use in supporting a specific radio communication channel configuration, e.g. dedicated control channel or traffic channel in U.S. 4,159,851 and standalone dedicated control channels or traffic channels in the CME20 system.

More recent wireless communication systems, such as Universal Mobile Telecommunication Systems (UMTS), are intended to provide a wide range of different radio transmission services for supporting numerous multimedia communication scenarios. In support for this wide range of different radio transmission services, a large number of different radio communication channel configurations are being defined. Providing different pools of resources for each different radio communication channel configuration, would cause inflexible and inefficient usage of resources in the radio access network of a UMTS-system. Thus, different types of resources in a UMTS radio access network are typically organized in resource pools, wherein the resources in each resource pool are not reserved for supporting any specific type of radio communication channel configuration, such as standalone dedicated control channels, but may on the contrary be used to support several different types of radio communication channel configurations.

WO 99/20069 discloses methods of initiating a reconfiguration of a cell regarding the number of signaling channels in relation to the number of traffic channels. According to an increase condition, a traffic channel is converted to a signaling channel and according to a decrease condition, a signaling channel is reconverted to a traffic channel.

WO 99/03289 discloses a method for flexible capacity dynamic frequency allocation in a cellular radio network, wherein a portion of total available frequencies is allocated to the cells of the cellular network in a fixed manner, and remaining frequencies form a common frequency pool from which frequencies are temporarily allocated to a respective cell based on traffic consideration.

### SUMMARY OF THE INVENTION

The present invention addresses the problem of enabling an efficient way of performing resource allocation for supporting standalone dedicated control channels in a radio access network while at the same time admitting flexible and efficient usage of resources in the radio access network.

The problem is solved essentially by arranging available resources both as resource sets prereserved for supporting standalone dedicated signalling control channels as well as resources available for supporting different types of radio communication channel configurations, including standalone dedicated control channels, and automatically deciding whether to support a standalone dedicated control channel using one of the prereserved resource sets or corresponding resources currently available for supporting different types of radio communication channel configurations.

More specifically, the problem is solved by a method according to claim 1 and a resource handling apparatus according to claim 8.

A general object of the invention is to enable an efficient way of performing resource allocation for supporting standalone dedicated control channels in a radio access network while at the same time admitting flexible and efficient usage of resources in the radio access network.

Another object of the invention is to reduce processing load of control processors in radio network controllers and/or radio base stations.

Yet another object is to reduce the consumed signalling bandwith on interfaces between radio base stations and radio network controllers.

Still another object is to reduce the average response time for establishment of standalone dedicated control channels.

A general advantage afforded by the invention is that it enables an efficient way of performing resource allocation for supporting standalone dedicated control channels in a radio access network while at the same time it admits flexible and efficient usage of resources in the radio access network.

Another advantage of the invention is that it affords reduced processing load of control processors in radio network controllers and/or radio base stations.

Yet another advantage is to reduce the consumed signalling bandwith on interfaces between radio base stations and radio network controllers.

Still another advantage afforded by the invention is that it reduces the average response time for establishment of standalone dedicated control channels.

The invention will now be described in more detail with reference to exemplary embodiments thereof and also with reference to the accompanying drawings.

### BRIEF DESCRIPTION OF THE DRAWINGS

Fig. 1 is a schematic view of an example mobile communications system in which the present invention may be advantageously employed.
Fig. 2 is a block diagram providing a simplified illustration of the radio interface architecture of the communication system in Fig. 1.
Fig. 3 is a block diagram illustrating how the physical layer and the MAC-layer of the radio interface architecture are mapped onto different elements of the communication system.
Fig. 4 is a flow diagram illustrating a basic method according to the invention for resource allocation.
Fig. 5A is a block diagram illustrating resources and a DCCH resource cache in a radio network controller and a radio base station according to a first exemplary embodiment of the invention.
Fig. 5B is a block diagram illustrating a data structure holding data associated with the DCCH resource cache illustrated in Fig. 5A.
Fig. 6A is a flow diagram illustrating establishment of a standalone dedicated control channel in accordance with the first exemplary embodiment of the invention.
Fig. 6B is a flow diagram illustrating release of a standalone dedicated control channel in accordance with the first exemplary embodiment of the invention.
Fig. 7A is a signal sequence diagram illustrating signal interactions when assigning a standalone dedicated control channel to a mobile station and using resources outside of the DCCH resource cache.
Fig. 7B is a signal sequence diagram illustrating signal interactions when assigning a standalone dedicated control channel to a mobile station and using resources in the DCCH resource cache.
Fig. 8A is a signal sequence diagram illustrating signal interactions when releasing a standalone dedicated control channel and the resources supporting said channel.
Fig. 8B is a signal sequence diagram illustrating signal interactions when releasing a standalone dedicated control channel and inactivating the resources supporting said channel.

### DETAILED DESCRIPTION OF THE EMBODIMENTS

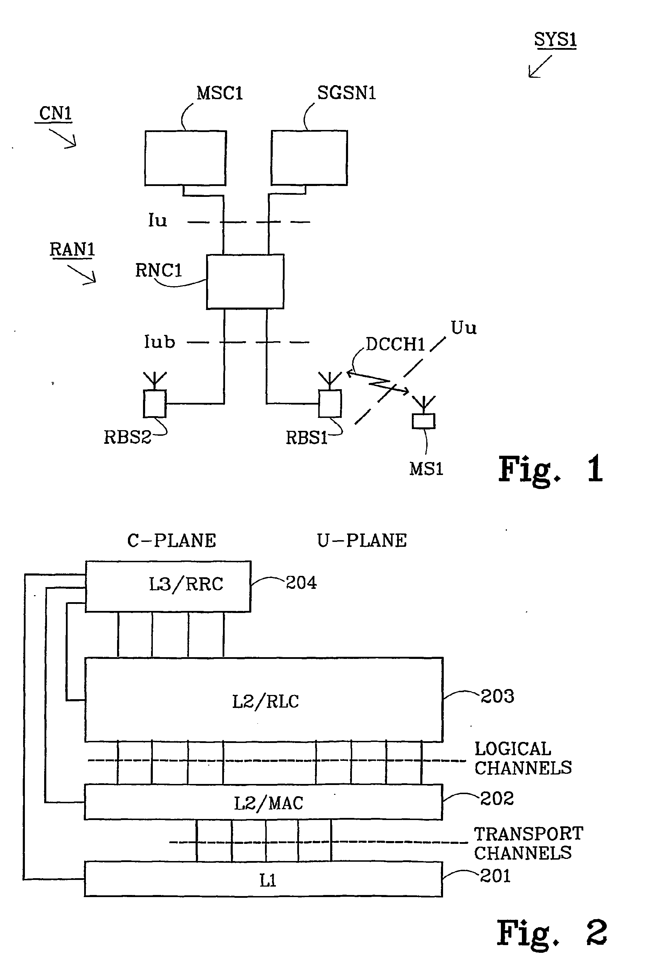

Fig. 1 illustrates a non-limiting example of a communication system SYS1 in which the present invention may be employed. The exemplary communication system SYS1 illustrated in Fig. 1 is a Universal Mobile Telecommunication System (UMTS). The communication system SYS1 includes a core network CN1, a UMTS Terrestrial Radio Access Network (UTRAN) RAN1 and User Equipment (UE), alternatively referred to as mobile stations (MS).

The core network CN1 includes a Mobile services Switching Center (MSC) node MSC1 that provides circuit-switched services and a General Packet Radio Service (GPRS) node SGSN1, sometimes referred to as a serving GPRS node (SGSN), which is tailored to provide packet-switched type services.

Each of the core network nodes MSC1 and SGSN1 connects to the the radio access network RAN1 over a radio access network interface referred to as the Iu interface. The radio access network RAN1 includes one or more radio network controllers (RNCs). For sake of simplicity, the radio access network RAN1 of Fig. 1 is shown with only one radio network controller node RNC1. Each radio network controller is connected to and controls a plurality of radio base stations (RBSs). For example, and again for sake of simplicity, Fig. 1 only illustrates a first radio base station node RBS1 and a second radio base station node RBS2 connected to the radio network controller node RNC1 The interface between the radio network controller RNC1 and the base stations RBS1 and RBS2 is referred to as the Iub interface.

Mobile stations, such as mobile station MS1 shown in Fig. 1, communicate with one or more radio base stations RBS1-RBS2 over a radio or air interface referred to as the Uu interface.

Each of the radio interface Uu, the Iu interface and the Iub interface are shown by dashed lines in Fig. 1

Fig. 2 is a simplified illustration of the radio interface architecture.

The radio interface is layered into three protocol layers:
- the physical layer, also referred to as Layer 1 (L1)
- the data link layer, also referred to as Layer 2(L2)
- the network layer, also referred to as Layer 3(L3).

Layer 2 is split into a number of sublayers including a Medium Access Layer (MAC) and a Radio Link Control (RLC) sublayer.

Layer 3 and the RLC-sublayer are further divided into a Control-plane (C-plane) and a User-plane (U-plane). The U-plane protocols implements so called radio access bearer services, i.e. service for carrying user data (e.g. speech, data or multimedia) between mobile stations and the core network. The C-plane provides protocols for controlling the radio access bearers and the connection between mobile stations and the network from different aspects.

The physical layer 201 offers information transfer services to the MAC-layer and higher layers. The physical layer transport services are described by how and with what characteristics data are transferred over the radio interface. These services are denoted Transport Channels. Among the plurality of transport channel types, there is a transport channel type Dedicated Channel (DCH) used for information transfer relating to one mobile station in the uplink direction, i.e. from the mobile station to the radio access network, or in the downlink direction, i.e. from the radio access network to the mobile station. The physical layer 201 is responsible for mapping the transport channels onto physical channels of the radio interface Uu. In the so called UTRAN FDD mode, a transport channel of type Dedicated Channel is mapped in the downlink direction on at least one downlink Dedicated Physical Channel (downlink DPCH) while a Dedicated Channel in the uplink direction is mapped onto a set of physical channels including an uplink Dedicated Physical Control Channel (uplink DPCCH) and at least one uplink Dedicated Physical Data Channels (uplink DPDCH). The physical layer 201 performs functions including FEC encoding/decoding and interleaving/deinterleaving of transport channels, multiplexing/demultiplexing of transport channels, rate matching, modulation/demodulation and spreading/despreading of physical channels, closed-loop power control and RF-processing.

The MAC-sublayer 202 provides data transfer services on logical channels. A set of logical channel types is defined for different kinds of data transfer services offered by the MAC-sublayer. Each logical channel type is defined by what type of information is transferred. Among the plurality of logical channel types defined, there is a logical channel type Dedicated Control Channel (DCCH) which is a point-to-point bi-directional channel for transferring dedicated control information between a mobile station and the radio access network. The MAC-sublayer 202 performs functions including mapping between logical channels and transport channels, selection of appropriate transport format for each transport channel depending on instantaneous source rate, transport channel type switching and ciphering.

The RLC-sublayer 203 provides different data transfer services to higher layers including transparent, unacknowledged and acknowledged data transfer. The RLC-sublayer 203 performs functions including segmentation and reassembly of higher layer protocol data units, concatenation, error correction and flow control.

The Radio Resource Control (RRC) sublayer 204 of layer 3 handles the control plane signalling of Layer 3 between mobile stations and the radio access network RAN1. The functions handled by the RRC-sublayer 204 includes establishment/release of RRC connections between mobile stations and the radio access network as well as assignment, reconfiguration and release of radio resources for RRC-connections.

More details of the radio interface protocol architecture can be found in the 3^{rd} Generation Partnership Project (3GPP) specification TS 25.301 (version 4.4.0).

In many instances control signalling is performed between a mobile station, such as mobile station MS1 in Fig. 1, and the radio access network RAN1 using a logical channel of type dedicated control channel mapped on a pair of transport channels of type dedicated channel, i.e. one uplink dedicated channel and one downlink dedicated channel, which are the only transport channels allocated to the mobile station. This channel configuration is referred to through out this document as a standalone dedicated control channel. Standalone dedicated control channels are used for performing Location Area, Routing Area update and other registration procedures (e.g attach/detach) procedures, transferring point-to-point SMS-messages as well as a signalling channel when establishing a bearer service. For UTRAN FDD mode, the uplink and downlink dedicated channels of a standalone dedicated control channel are the only transport channels mapped on a set of physical channels including an uplink Dedicated Physical Data Channel, an uplink Dedicated Physical Control Channel and a downlink Dedicated Physical Channel.

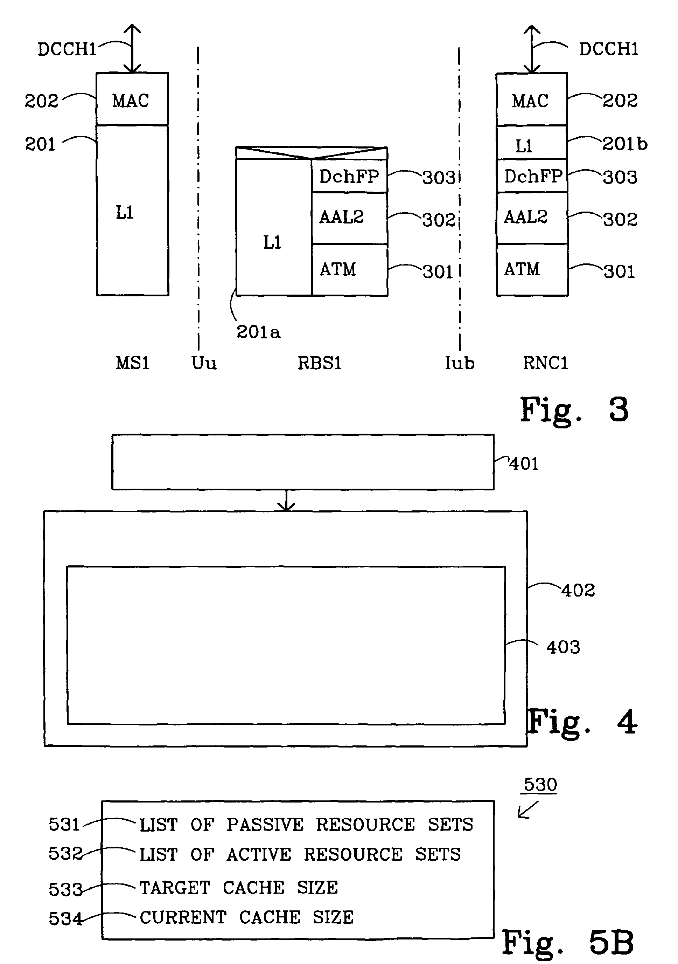

Fig. 3 illustrates how the physical layer and the MAC layer of the radio interface architecture are mapped onto different elements of Fig. 1 for an example scenario in which the mobile station MS1 communicates with the radio access network RAN1 using a standalone dedicated control channel DCCH1 for performing Location Area updating. In this example scenario, it is assumed that the mobile station MS1 is operating in a cell served by the first radio base station RBS1. As illustrated in Fig. 3, the mobile station MS1 implements both the physical layer 201 and the MAC-sublayer 202. In the radio access network RAN1, the first radio base station RBS1 implements most of the physical layer 201a, except for those parts relating to macrodiversity combining and splitting 201b which are implemented by the radio network controller RNC1. The radio network controller RNC1 implements the MAC-sublayer 202 in the radio access network RAN1. Communication of data associated with the standalone dedicated control channel DCCH1 between the radio network controller RNC1 and the first radio base station RBS1 is provided by a DCH frame protocol layer 303 on top of an ATM Adaption Layer type 2 (AAL2) layer 302 and an Asynchronous Transfer Mode (ATM) layer 301.

Before communication between the mobile station MS1 and the radio access network RAN1 may occur on the standalone dedicated control channel DCCH1, resources must be allocated and configured in the radio access network RAN1 for supporting the standalone dedicated control channel DCCH1. Thus, in accordance with the functional mapping in Fig. 3, resources need to be allocated in the first radio base station RBS1 for performing radio interface physical layer functions as well as DCH frame protocol, AAL2 and ATM functions while resources must be allocated in the radio network controller RNC1 for performing DCH frame protocol, AAL2 and ATM functions as well as resources for performing MAC functions and sometimes also macrodiversity combining and splitting.

In present UMTS radio access networks, different types of resources are typically arranged in resource pools. The resources in each resource pool are not reserved for supporting any specific type of radio communication channel configuration, such as standalone dedicated control channels, but may on the contrary be used to support different kinds of radio communication channel configurations. Upon detecting a need for allocation of a radio communication channel to a mobile station, required resources are allocated from different resource pools and configured to support the particular type of radio communication channel configuration being allocated. When the radio communication channel later on is being released, the allocated resources are once more included in the different resource pools and made available to support different kinds of radio communication channel configurations. This way of arranging available resources in resource pools, where the individual resources are available for supporting different kinds of radio communication channel configurations admits flexible and efficient usage of resources in the radio access network.

However, the inventors of the present invention have recognized that due to the very frequent demand for standalone dedicated control channels, the allocation of resources for supporting standalone dedicated control channels causes significant processing load in control processors of radio network controllers and radio base stations in a radio access network as well as heavy signalling load on the Iub interface. The load problem is particularly severe for radio base stations handling cells located on a Location Area or Routing Area border due to location/routing area procedures being performed via said radio base stations.

The present invention addresses the problem of enabling an efficient way of performing resource allocation in a radio access network for supporting standalone dedicated control channels while at the same time admitting flexible and efficient usage of resources in the radio access network.

Fig. 4 illustrates a basic method according to the invention for resource allocation in a radio access network supporting a plurality of different types of radio communication channel configurations for communication with mobile stations operating in an area served by the radio access network.

At step 401 a need for allocating a first standalone dedicated control channel to a first mobile station is detected.

At step 402, allocation of resources in the radio access network for supporting the first standalone dedicated control channel is performed. This resource allocation step involves a substep 403 of automatically deciding, according to a predetermined rule and for at least a subset of the resources supporting the first standalone dedicated control channel, whether said subset should be provided using a first resource set from a pool of resource sets prereserved for supporting standalone dedicated control channels or whether said subset should be provided using resources corresponding to the first resource set but currently available for supporting different types of radio communication channel configurations, including standalone dedicated control channels.

Supporting standalone dedicated control channels using resource sets prereserved for supporting standalone dedicated control channels enables resource allocation to be performed efficiently. At the same time, allowing standalone dedicated control channels to alternatively be supported by resources which are not prereserved for such use but also are available for supporting other radio communication channel configurations, admits flexible and efficient usage of resources in the radio access network.

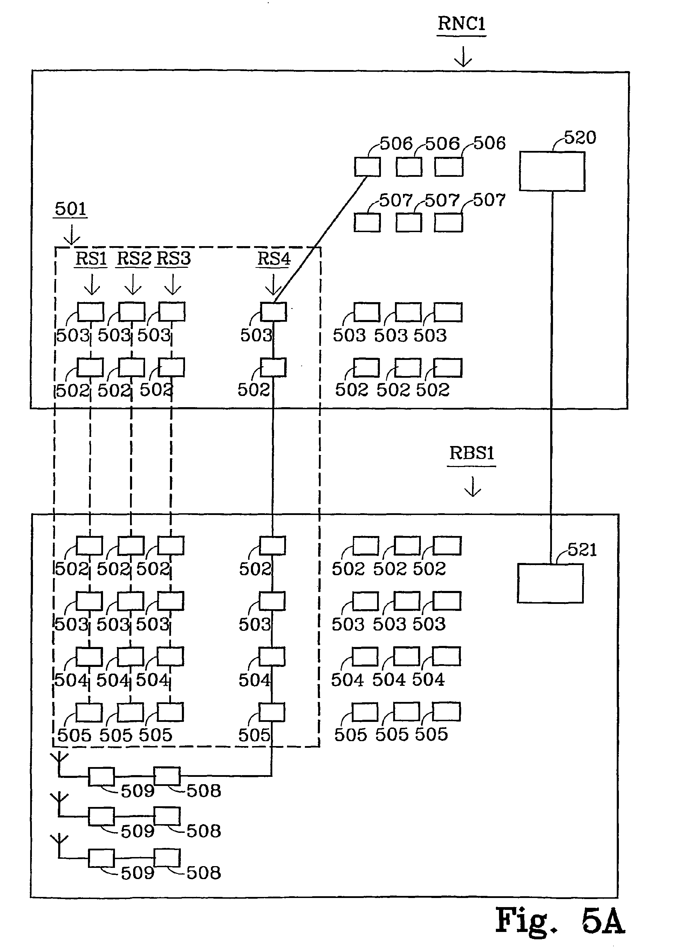

A first exemplary embodiment of the invention for use in the context of the radio access network RAN1 in Fig. 1 is illustrated in Fig. 5-8.

Fig. 5A provides a schematic illustration of resources in the radio network controller RNC1 and the first radio base station RBS1 providing the functions illustrated in Fig. 3 for supporting standalone dedicated control channels as well as other types of channel configurations.

The radio network controller RNC1 includes MAC-layer processing resources 506, macrodiversity processing resources 507, DCH frame protocol processing resources 503 and AAL2/ATM processing resources 502.

The first radio base station RBS1 includes AAL2/ATM processing resources 502, DCH frame protocol processing resources 503 as well as resources 504-505 and 508-509 providing the part of the the radio interface physical layer functions 201a implemented in the first radio base station RBS1. The functional division among the resources providing radio interface physical layer functions in the first base station RBS1 is as follows. Transport channel processing resources 504 provides all digital processing related to individual transport channels, while each physical channel processing resource 505 provides transport channel multiplexing/demultiplexing and other digital processing, related to a group of one or more physical channels on which a certain set of one or more transport channels are mapped. For each base station sector, there is a radio frequency (RF) sector unit 509 and an associated sector base band processing unit 508. The RF-sector unit 509 performs all RF-processing of signals transmitted/received by the first radio base station RBS1 in the sector while the sector base band processing unit 508 performs all digital base band processing common to all physical channels transmitted/received by the first radio base station RBS1 in the sector.

In this exemplary first embodiment of the invention, the radio network controller RNC1 maintains a DCCH resource cache for each radio base station RBS1-RBS2 connected to the radio network controller. Each DCCH resource cache includes not only available resource sets prereserved and preconfigured for supporting standalone dedicated control channels but also resource sets which are actually allocated for supporting standalone dedicated control channels assigned to mobile stations. Resource sets included in a DCCH resource cache and actually allocated for supporting assigned standalone dedicated control channels are said to be in an active state, while available resource sets included in a DCCH resource cache, i.e. resource sets which currently are not allocated in support of assigned standalone dedicated control channels, are said to be in a passive state.

As an example, Fig. 5A illustrates a DCCH resource cache 501 including 4 resource sets RS1-RS4, wherein three resource sets RS1-RS3 are in a passive state, i.e. prereserved and preconfigured for supporting standalone dedicated control channels but currently not allocated in support of assigned standalone dedicated control channels, while the fourth resource set RS4 is in an active state, i.e, actually allocated for supporting an assigned standalone dedicated control channel. The passive resource sets RS1-RS3 of the DCCH resource cache 501 constitute a pool of resource sets prereserved and preconfigured for supporting standalone dedicated control channels. Fig. 5A further illustrates that each resource set RS1-RS4 includes resources both in the radio network controller RNC1 and in the first radio base station RBS1. Each resource set RS1-RS4 in Fig. 5A includes digital processing resources comprising ATM/AAL2 processing resources 502 and DCH frame protocol processing resources 503 in both the radio network controller RNC1 and the first radio base station RBS1. Each resource set RS1-RS4 further includes a transport channel processing resource 504 and a physical channel processing resource 505 in the first radio base station RBS1.

Fig. 5A further shows control processors 520-521 in the radio network controller RNC1 and the first radio base station RBS1 respectively. The control processors 520-521 interact with each other e.g. when allocating resources for supporting standalone dedicated control channels and when releasing/inactivating resources upon release of standalone dedicated control channels. The control processors 520-521 interact with each other using the Node B Application Part (NBAP) protocol.

The control processor 520 in the radio network controller RNC1 functions as a resource allocating circuit for allocating resources in support of standalone dedicated control channels as well as other communication channel configurations. Fig. 5B illustrates an exemplary data structure 530 used by the control processor 520 in the radio network controller RNC1 for holding data associated with the DCCH resource cache 501. The data structure includes a list of passive resource sets 531, a list of active resource sets 532, a target cache size 533 and a current cache size 534. The list of passive resource sets 531 defines a pool of resource sets which are prereserved for supporting standalone dedicated control channels.

Each resource set RS1-RS4 in the DCCH resource cache 501 constitutes only a subset of the resources necessary to support a standalone dedicated control channel in the radio access network RAN1. Thus in order to provide complete support for a standalone dedicated control channel, a resource set provided to support the standalone dedicated control channel needs to be supplemented by allocating a MAC-layer processing resource 506, and possibly also a macrodiversity processing resource 507 in the radio network controller RNC1 and in the first base station RBS1 the physical channel processing resource 505 of the resource set needs to be linked to the appropriate sector base band unit 508 and RF-sector unit 509. Fig. 5A illustrates how the active resource set RS4 is linked to a MAC-layer processing resource 506 and a sector base band unit 508 and RF-sector unit 509.

A macrodiversity processing resource 507 need only be allocated to support a standalone dedicated control channel in a soft handover situation where the standalone dedicated control channel is also supported by resources in other radio base stations apart from the first radio base station RBS1. In a situation of so called softer handover, i.e. where transmission/reception occurs in plural sector cells served by the first radio base station RBS1, the allocated physical channel resource 505 is connected to several sector base band processing units and performs the required diversity processing.

Fig. 5A also illustrates that there are AAL2/ATM processing resources 502 and DCH frame protocol processing resources 503 in both the radio network controller RNC1 and the first radio base station RBS1 as well as transport channel processing resources 504 and physical channel processing resources 505 in the first radio base station RBS1 which are not part of any resource set in the DCCH cache 501 and which currently are not reserved for supporting any specific type of radio communication channel but are available for supporting different types of radio communication channel configurations including standalone dedicated control channels.

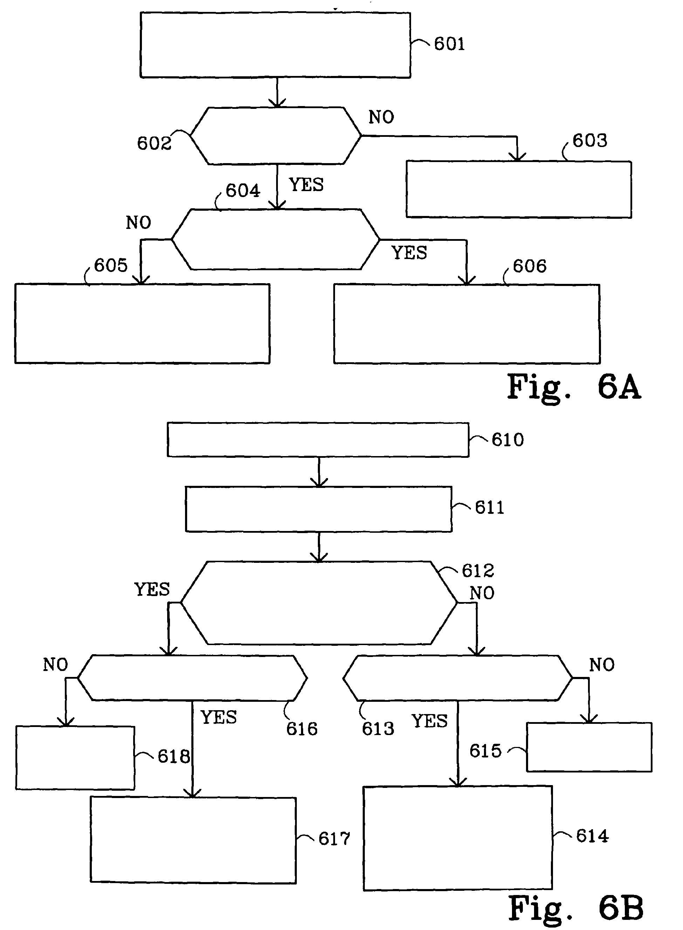

Fig. 6A illustrates how resources in the radio network controller RNC1 and the first radio base station RBS1 are allocated in accordance with the first exemplary embodiment of the invention. At step 601, the radio network controller RNC1 receives a channel establishment request from a mobile station, e.g. mobile station MS1 in Fig. 1, via the first radio base station RBS1. At step 602, the radio network controller RNC1 determines whether establishment of a standalone dedicated control channel is requested by the mobile station MS1. If the requested type of channel configuration is not a standalone dedicated control channel (an alternative NO at step 602), establishment of the requested channel configuration proceeds at step 603 using available resources 502-505 in the radio network controller RNC1 and the first base station RBS1 not included in the DCCH resource cache 501. If the requested channel configuration type is in fact a standalone dedicated control channel (an alternative YES at step 602), the radio network controller RNC1 determines at step 604 whether there is at least one passive resource set available in the DCCH resource cache 501. If there is no passive resource set available in the DCCH resource cache 501 (an alternative NO at step 604), the radio network controller RNC1 proceeds at step 605 to allocate corresponding resources 502-505 outside of the DCCH resource cache 501 for supporting the standalone dedicated control channel being established. If there is at least one passive resource set available in the DCCH resource cache 501 (an alternative YES at step 604), the radio network controller RNC1 proceeds at step 606 to allocate and activate one passive resource set from the DCCH resource cache 501 for supporting the standalone dedicated control channel being established. Thus, the number of passive resource sets in the DCCH resource cache 501 will be reduced while the number of active resource sets in the DCCH resource cache 501 will increase.

Note that the flow chart of Fig. 6A deals with the situation where the radio network controller RNC1 functions as both serving radio network controller (SRNC) and controlling radio network controller (CRNC) (see 3GPP TS 25.401). In a situation where the radio network controller RNC1 does not have both the serving and controlling radio network controller roles when establishing a standalone dedicated control channel or adding a macro diversity leg, resources outside of the DCCH resource cache 501 will be allocated in support of the standalone dedicated control channel.

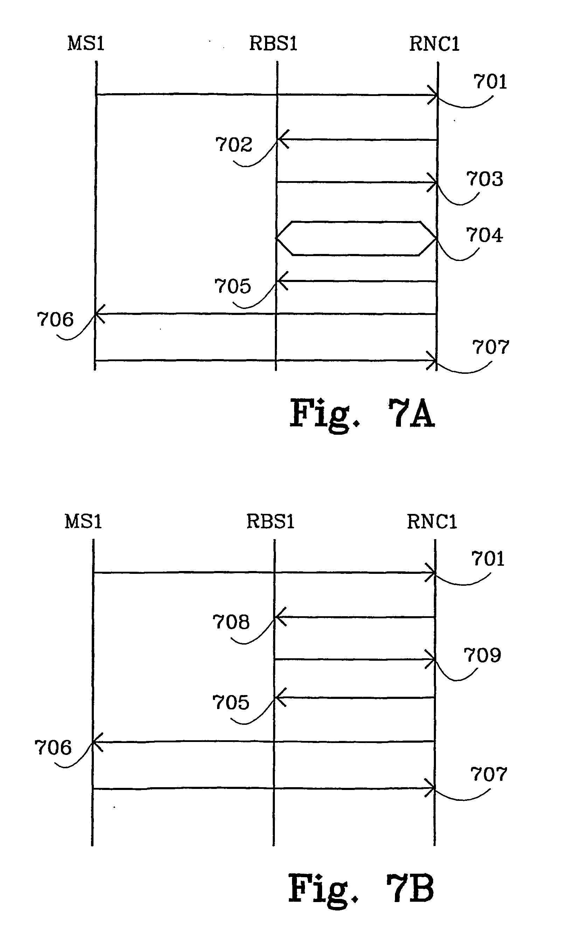

Fig. 7A illustrates signal interactions between the mobile station MS1, the radio network controller RNC1 and the first radio base station RBS1 when assigning a standalone dedicated control channel to the mobile station MS1 and using resources outside of the DCCH resource cache 501 for supporting said standalone dedicated control channel.

The mobile station MS1 transmits a RRC Connection Request message 701 on a logical channel of type Common Control Channel (CCCH) via the first radio base station RBS1 to the radio network controller RNC1. After deciding that a standalone dedicated control channel should be assigned to the mobile station MS1 and that resources outside of the DCCH resource cache 501 should be used for supporting this standalone dedicated control channel, the radio network controller RNC1 allocates a MAC-layer processing resource 506 in the radio network controller RNC1 and transmits a Radio Link Setup Request message 702 to the first radio base station RBS1. The first radio base station RBS1 allocates a transport channel processing resource 504 and a physical channel processing resource 505 in the first radio base station RBS1 outside of the DCCH resource cache 501. The allocated physical channel processing resource 505 is linked to one or more of the sector base band processing units 508 as specified by radio link information data in the Radio Link Activate Setup message. The first radio base station RBS1 returns a Radio Link Setup Response message 703 to the radio network controller RNC1. Signalling 704 for setting up an Iub Data Transport Bearer, i.e. a DCH frame protocol connection on top of an AAL2 connection, is then performed between the radio network controller RNC1 and the first radio base station RBS1. This signalling 704 results in allocation of AAL2/ATM processing resources 502 and DCH frame protocol processing resources 503 in both the radio network controller RNC1 and the first radio base station RBS1 outside of the DCCH resource cache 501 for communication of dedicated control channel associated data between the radio network controller RNC1 and the first radio base station RBS1. In the radio network controller RNC1, the allocated DCH frame protocol resource 503 is linked to the allocated MAC-processing resource 506 and in the first radio base station RDS1, the allocated DCH frame protocol resource 503 is linked to the allocated transport channel processing resource 504. Radio reception in the uplink direction of the standalone dedicated control channel is initiated in the radio network controller RNC1 and the first radio base station RBS1 and after a signal exchange 705 for synchronizing the Iub Data Transport Bearer, i.e. the connection between the DCH frame protocol processing resources 503 in the radio network controller RNC1 and the first base station RBS1 respectively, radio transmission in the downlink direction of the standalone dedicated control channel is initiated. The complete chain of resources in the radio network controller RNC1 and the first base station RBS1 for supporting the standalone dedicated control channel is now ready.

The mobile station MS1 is informed that it has been assigned a standalone dedicated control channel by transmission of a RRC Connection Setup message 706 from the radio network controller RNC1 to the mobile station MS1 via the first radio base station RBS1 on the Common Control Channel. The mobile station MS1 responds by transmitting a RRC Connection Setup Complete message 707 to the radio network controller RNC1 on the established standalone dedicated control channel.

The signal interactions illustrated in Fig. 7A are identical with those occuring in a prior art UMTS radio access network. The RRC Connection Request 701, RRC Connection Setup 706 and RRC Connection Setup Complete 707 messages are all specified in the 3GPP RRC protocol specification (3GPP TS 25.331, version 3.6.0), the Radio Link Setup Request 702 and Radio Link Setup Response 703 messages are specified in the 3GPP Node B Application Part (NBAP) protocol specification (3GPP TS 25.433, version 3.1.0) and the signalling 704 for establishing the Iub Data Transport Bearer are specified in ITU-T Q.2630.1 specifications.

Fig. 7B illustrates signal interactions between the mobile station MS1, the radio network controller RNC1 and the first radio base station RBS1 when assigning a standalone dedicated control channel to the mobile station MS1 and allocating an available passive resource set from the DCCH resource cache 501 for supporting said standalone dedicated control channel.

The mobile station MS1 transmits a RRC Connection Request message 701 on a logical channel of type Common Control Channel via the first radio base station RBS1 to the radio network controller RNC1. After deciding that a standalone dedicated control channel should be assigned to the mobile station MS1 and that an avaliable passive resource set from the DCCH resource cache 501 should be activated and used for supporting this standalone dedicated control channel, the radio network controller RNC1 allocates the selected resource set and a MAC-layer processing resource 506. The resources 502-503 of the selected resource set in the radio network controller node RNC1 are activated and the DCH frame protocol processing resource 503 of the selected resource set and the allocated MAC-layer processing resource 506 are linked together in the radio network controller RNC1. The radio network controller RNC1 then transmits a new Radio Link Activate Request message 708 to the first radio base station RBS1. Resources belonging to a passive resource set in the first radio base station RBS1 maintain some of the parameters, e.g. Transport Format Combination Set (TFCS), originally received from the radio network controller node RNC1 in a Radio Link Setup Request message. Thus the new NBAP Radio Link Activate Request message 708 need only include a subset of the parameter set specified for the NBAP Radio Link Setup message. In particular, the Radio Link Activate Request signal includes channelization code(s), scrambling code(s), cell-identity/identities, frame timing parameters and downlink transmission power parameters (initial, maximum and minimum downlink transmission power). The first radio base station RBS1 responds to the new NBAP Radio Link Activate Request message by activating the resources 502-505 of the selected resource set in the first radio base station RBS1. The physical channel processing resource 505 of the selected resource set is linked to one or more of the sector base band processing units 508 as specified by radio link information data in the Radio Link Activate Request message.The first radio base station RBS1 returns a new NBAP Radio Link Activate Response message 709 to the radio network controller RNC1. The new NBAP signal Radio Link Activate Response 709 includes essentially the same parameters as the NBAP Radio Link Seup Response message. Radio reception in the uplink direction of the standalone dedicated control channel is initiated in the radio network controller RNC1 and the first radio base station RBS1 and after a signal exchange 705 for synchronizing the Iub Data Transport Bearer, i.e. the connection between the DCH frame protocol processing resources 503 of the activated resource set in the radio network controller RNC1 and the first base station RBS1, radio transmission in the downlink direction of the standalone dedicated control channel is initiated. The complete chain of resources in the radio network controller RNC1 and the first base station RBS1 for supporting the standalone dedicated control channel is now ready.

The mobile station MS1 is then informed that it has been assigned a standalone dedicated control channel by transmission of a RRC Connection Setup message 706 from the radio network controller RNC1 to the mobile station MS1 via the first radio base station RBS1 on the Common Control Channel. The mobile station MS1 responds by transmitting a RRC Connection Setup Complete 707 message to the radio network controller RNC1 on the established standalone dedicated control channel.

As illustrated by Fig. 7A and 7B the signalling 704 relating to establishment of an Iub Data Transport Bearer is eliminated when a standalone dedicated control channel can be supported using a prereserved resource set RS1-RS3 in the DCCH resource cache 501. This provides significant savings in terms of the processing load of control processors 520-521 performing resource allocation in the radio network controller RNC1 and the first radio base station RBS1 respectively, the signalling bandwith consumed in the Iub-interface and the response time for establishing an individual standalone dedicated control channel.. Further savings result from the fact that the proposed new NBAP Radio Link Activate Request message only includes a subset of the parameters in a NBAP Radio Link Setup message and thus can be characterized as a "light-weight" signal consuming less bandwith in the Iub-interface and causing less processing load on the control processors 520-521 as compared to an ordinary NBAP Radio Link Setup message.

Fig. 6B illustrates how resources supporting a standalone dedicated control channel are handled in the radio network controller RNC1 and the first base station RBS1 upon release of the standalone dedicated control channel assigned to the mobile station MS1.
At step 610, the radio network controller RNC1 decides to release the standalone dedicated control channel e.g. as a result of receiving a release command message from the core network CN1. At step 611 the radio network controller informs the mobile station MS1 that the standalone dedicated control channel is being released. At step 612, the radio network controller RNC1 decides whether the standalone dedicated control channel is supported by an active resource set included in the DCCH resource cache 501 or corresponding resources outside of the DCCH resource cache 501.
If the standalone dedicated control channel is supported by resources not included in the DCCH resource cache 501 (an alternative NO at step 612), a check is made at step 613 whether the current size of the DCCH resource cache, i.e. the total number of resource sets (both passive and active) in the DCCH resource cache 501 is less than the target cache size. If the current size of the DCCH resource cache 501 is less than the target cache size (an alternative YES at step 613), processing proceeds at step 614 where the resources 502-505 used to support the standalone dedicated control channel are inactivated and added to the DCCH resource cache 501 as a passive resource set. If the current size of the DCCH resource cache is not less than the target cache size (an alternative NO at step 613), processing proceeds at step 615 where the resources 502-505 used to support the standalone dedicated control channel are released, i.e. made available for supporting different types of communication channel configurations.
If the standalone dedicated control channel is supported by an active resource set included in the DCCH resource cache 501 (an alternative YES at step 612), a check is made at step 616 whether the current size of the DCCH resource cache 501 is greater than the target cache size. If the current size of the DCCH resource cache 501 is greater than the target cache size (an alternative YES at step 616), processing proceeds at step 617 where the resource set is removed from the DCCH resource cache 501 and the individual resources 502-505 are released, i.e. made available for supporting different types of communication channel configurations. If the current size of the DCCH resource cache 501 is not greater than the target cache size (an alternative NO at step 616), processing proceeds at step 618 where the resource set is inactivated, i.e. the resource set enters the passive state.
The MAC-layer processing resource 506 and a possible macrodiversity processing resource 507 in the radio network controller RNC1 used to support the standalone dedicated control channel being released are always released at steps 614, 615, 617 and 618.

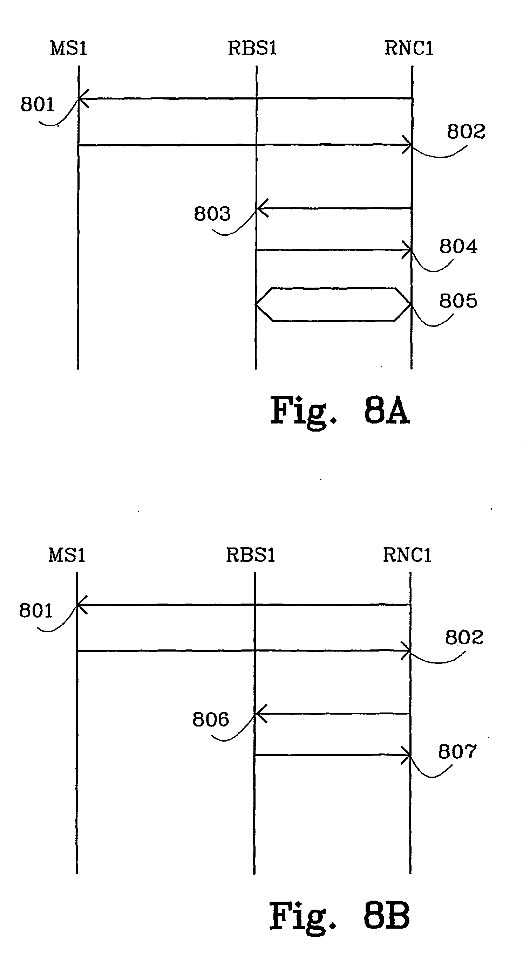

Fig. 8A illustrates signal interactions between the mobile station MS1, the radio network controller RNC1 and the first radio base station RBS1 when releasing a standalone dedicated control channel and the resources 502-505 supporting the standalone dedicated control channel are being released.

The radio network controller RNC1 transmits a RRC Connection Release message 801 on the standalone dedicated control channel to the mobile station MS1. The mobile station MS1 responds by transmitting a RRC Connection Release Complete message 802 on the standalone dedicated control channel. The radio network controller RNC1 transmits a NBAP Radio Link Deletion Request message 803 to the first radio base station RBS1 ordering release of the physical channel processing resource 505 and the transport channel processing resource 504 supporting the standalone dedicated control channel. The first radio base station RBS1 releases the resources 504 and 505 as ordered, which causes said resources to become available for supporting different types of communication channel configurations, and returns a NBAP Radio Link Deletion Response message 804 to the radio network controller RNC1. The radio network controller RNC1 then initiates signalling 805 for releasing the Iub Data Transport Bearer used to support the standalone dedicated control channel being released. This signalling 805 causes release of the associated AAL2/ATM processing resources 502 and DCH frame protocol resources 503 in the radio controller RNC1 and the first base station RBS1 respectively. Finally, the radio network controller RNC1 releases the MAC-processing resource 506 and a possible macrodiversity processing resource 507 used to support the standalone dedicated channel being released.

The signal interactions illustrated in Fig. 8A are identical with those occuring in a prior art UMTS radio access network. The RRC Connection Release 801 and RRC Connection Release Complete 802 messages are both specified in the 3GPP RRC protocol specification (3GPP TS 25.331, version 3.6.0), the Radio Link Delete Request 803 and Radio Link Delete Response 804 messages are specified in the 3GPP Node B Application Part (NBAP) protocol specification (3GPP TS 25.433, version 3.1.0) and the signalling 805 for releasing the Iub Data Transport Bearer is specified in ITU-T Q.2630.1 specifications.

Fig. 8B illustrates signal interactions between the mobile station MS1, the radio network controller RNC1 and the first radio base station RBS1 when releasing a standalone dedicated control channel and resources 502-505 supporting the standalone dedicated control channel are inactivated instead of released.

The radio network controller RNC1 transmits a RRC Connection Release message 801 on the standalone dedicated control channel to the mobile station MS1. The mobile station MS1 responds by transmitting a RRC Connection Release Complete message 802 on the standalone dedicated control channel. The radio network controller RNC1 transmits a new NBAP Radio Link Inactivate Request message 806 to the first radio base station RBS1 ordering inactivation of the resources 502-505 supporting the standalone dedicated control channel. The first radio base station RBS1 inactivates the resources 502-505, i.e. ceases to use said resources for radio transmission and reception, but maintains the resources configured as required for supporting a standalone dedicated control channel, i.e. said resources 502-505 are not made available for supporting different types of communication channels. The first radio base station RBS1 returns a new NBAP Radio Link Inactivate Response message 807 to the radio network controller RNC1. Finally, the radio network controller RNC1 inactivates the concerned AAL2/ATM processing resource 502 and the DCH frame protocol processing resource 503 in the radio network controller RNC1 and releases the MAC-processing resource 506 and a possible macrodiversity processing resource 507 used to support the standalone dedicated channel being released. Thus, after completing the processing associated with the signal sequence illustrated in Fig. 8A, the resources 502-505 used to support the now released standalone dedicated control channel constitutes a passive resource set within the DCCH resource cache 501. The new NBAP messages Radio Link Inactivate Request 806 and Radio Link Inactivate Response 807 contain essentially the same parameter sets as specified for the NBAP Radio Link Delete 803 and Radio Link Delete Response 804 messages respectively.

As illustrated by Fig. 8A and 8B the signalling 805 relating to release of an Iub Data Transport Bearer is eliminated when the resources 502-505, and hence also the Iub Data Transport Bearer, are merely inactivated and not released. Thus the present invention provides significant savings in terms of the processing load of control processors 520-521 in the radio network controller RNC1 and the first radio base station RBS1 as well as the signalling bandwith consumed in the Iub-interface also in connection with effecting release of standalone dedicated control channels.

Standalone dedicated control channels may be reconfigured to add radio access bearer (RAB) services for providing e.g. speech or packet data. When such a reconfiguraion of a standalone dedicated control channel supported by an active resource set in the DCCH resource cache 501 occurs, the active resource set is removed from the DCCH resource cache 501 and thus the number of active resource sets as well as the total number of resource sets in the DCCH resource set are reduced.

According to the exemplary first embodiment of the invention, the radio network controller RNC1 adaptively adjusts the target size of the DCCH resource cache 501 to match the demand for standalone dedicated control channels.

In order to control the target cache size, the following parameters are defined:
*Ceiling,* a configuration parameter setting the maximum value of the target cache size. Even if the need for standalone dedicated control channels exceeds the value of the ceiling parameter, the target cache size will not increase above the value indicated by the ceiling parameter. The reason for this parameter is that a very high demand for standalone dedicated control channels should not create an "unlimited" DCCH resource cache size and thus cause too much congestion for setup of e.g. data services;
*Floor,* a configuration parameter setting the minimum value for the target cache size. Even if the need for standalone dedicated control channels is less than the floor parameter, the target cache size will not decrease under the value indicated by the floor parameter. The main reason for this parameter is to enable smoother handling of sudden bursts of request for standalone dedicated control channels during periods of otherwise low traffic. Note that the current cache size can become zero if e.g. the DCCH resource cache is drained due to a lot of reconfigurations of standalone dedicated control channels supported by active resource sets in the DCCH resource set;
Averaging period *tₐᵥ,* a configuration parameter controlling a time period length during which the average need for standalone dedicated control channels is calculated;
*Max start-up time tₛₜ,* a configuration parameter defining the maximum time after a system start/restart is ready before initiating an averaging period during which the average need for standalone dedicated control channels are determined. The averaging period begins when this time has elapsed or when the size of the DCCH resource cache has reached the target cache size, whatever occurs first;
*Initial target cache size,* a configuration parameter determining the initial value for the target cache size set at system start/restart. The initial target cache size should be selected in the range defined by the ceiling and floor parameters and a suitable default value for the initial target cache size is the average of the ceiling and floor parameters.

For each averaging period of length tₐᵥ, the average number of standalone dedicated control channels supported by the first radio base station RBS1 is calculated. Upon completion of one averaging period, the determined average number of standalone dedicated control channels is set as the new target cache size and a new averaging period is initiated. The target cache size may however not be set higher than allowed by the ceiling parameter and not lower than the value allowed by the floor parameter. As an alternative, a floating/sliding average can be calculated so that adjustment of target cache size can be done more often.

At system start/restart and when the target cache size has been increased, it may take some time for the actual size of the DCCH resource cache 501 to reach the target cache size. This is due to the fact that in the first exemplary embodiment of the invention, resource sets are only added to the DCCH resource cache 501 upon release of a standalone dedicated control channel which was not supported by a resource set already part of the DCCH resouce cache 501.

When the target cache size is decreased, resource sets are removed from the DCCH resource cache 501 upon release of standalone dedicated control channels supported by resource sets in the DCCH resource cache 501.

Apart from the exemplary first embodiment of the invention disclosed above, there are several ways of providing rearrangements, modifications and substitutions of the first embodiment resulting in additional embodiments of the invention.

Instead of having a variable target cache size of the DCCH resource cache as in the exemplary first embodiment, a fixed target cache size could be set by a configuration parameter.

Instead of adding resource sets to the DCCH resource cache upon release of standalone dedicated control channels as in the exemplary first embodiment, the NBAP Radio Link Setup Request message could be modified by an additional parameter indicating whether normal Radio Link Setup should be performed or whether a resource set should be assembled and then immediately added to the DCCH resource cache without first being used to support a standalone dedicated control channel. Alternatively a completely new NBAP message could be defined for the purpose of allowing resource sets to be assembled and then immediately added to the DCCH resource cache as a passive resource set. By allowing resource sets to immediately enter the passive state upon creation, the DCCH resource cache could be automatically built up to a required size after system start/restart.

An alternative solution for removing resource sets from the DCCH resource cache, allowing faster adjustment of the actual size of the DCCH resource cache to a new reduced target cache size, would be to immediately release passive resource sets in the DCCH resource cache 501. However, this alternative requires additional signals in the Iub-interface for allowing the radio network controller to indicate to the first radio base station RBS1 that inactivated resources are being released.

In order to further reduce the signalling between the radio network controller and the first base station, measurements started on a standalone dedicated control channel, e.g. SIR error measurements, could be automatically stopped upon inactivating a resource set and restarted again upon activation. This way the need for sending measurement start and stop NBAP messages is eliminated when using resources in the DCCH resource cache for supporting standalone dedicated control channels. The radio network controller and the radio base station would need to keep data defining the measurements associated with a resource set while the resource set is passive and the new NBAP Radio Link Activate message should include a parameter defining whether previous defined measurements for the resource set should be restarted upon activation of the resource set.

There are of course alternative ways of organizing resources and resource sets in a radio access network apart from the way schematically illustrated in Fig. 5A. Due to an UMTS radio access network being able to offer asymetrical radio transmission services in the uplink and downlink direction, separate resources are preferrably offered for handling the downlink and uplink direction respectively. There are also different ways of implementing digital processing resources e.g. as dedicated pieces of hardware or as processing capacities on shared pieces of hardware such as e.g. Digital Signal Processors (DSPs). Resource sets may also be defined to include more or less of the resources necessary to support a standalone dedicate control channel. As an example, based on the resources illustrated in Fig. 5A, resource sets could be defined to include both MAC-layer processing resources 506 and macrodiversity processing resources 507 in addition to the resources 502-505 of the resource sets RS1-RS4 illustrated in Fig. 5A. Preferrably each resource set would however include digital processing resources in both a radio network controller and a radio base station wherein the digital processing resources in the radio network controller are linked to the digital processing resources in the radio base station. In the first exemplary embodiment of the invention, the link between the digital processing resources in the radio network controller RNC1 and the digital processing resources in the first radio base station RBS1 is provided by the AAL2/ATM and DCH frame protocols. It is of course possible to use other protocols, e.g. based on the Internet Protocol (IP), to link resources in a radio network controller and a radio base station.

Instead of defining the DCCH resource cache as including both active and passive resource sets, DCCH resource caches could be defined as only including passive resource sets, i.e. each time a passive resource set is activated for supporting a standalone deedicated control channel, said resource set is also removed from the DCCH resource cache. Such a DCCH resource cache would thus only include resource sets prereserved for supporting standalone dedicated control channels.

Instead of having only one DCCH resource cache for each radio base station, several DCCH resource caches could be maintained for each radio base station and could be organized e.g. as separate DCCH resource caches for each sector/cell served by the radio base station, as separate DCCH resource caches for each radio carrier frequency used or as separate DCCH resource caches for different groups of radio carrier frequencies. It is also possible to organize two or more DCCH resource caches for a radio base station comprising different types of resource sets including more or less of the resources necessary to support a standalone dedicate control channel. Thus, in addition to the DCCH resource cache 501 illustrated in Fig. 5A, wherein each resource set includes resources 502-505, an additional DCCH resource cache could be provided comprising resource sets including resources 502-507. However, since resource usage efficieny is improved by having a single or only a few DCCH resource caches, it is preferred to only organize plural DCCH resource caches for a radio base station if a single DCCH resource cache, e.g. due to hardware restrictions, can not provide support for standalone dedicated control channels in all sectors and on all frequencies served by the radio base station.

In the exemplary first embodiment, provided the radio network controller acts both as serving and controlling radio network controller, a new standalone dedicated control channel is always supported by a resource set in the DCCH resource cache if there is at least one passive resource set, i.e. a resource set prereserved to be used for supporting standalone dedicated control channels, available in the DCCH resource cache. It is possible to define other rules for automatically deciding whether a standalone dedicated control channel should be supported using an available passive resource set in the DCCH resource cache or using resources corresponding to such a resource set but currently available for supporting different types of radio communication channel configurations including standalone dedicated control channels. One example of another viable rule would be to use a passive resource set to support a standalone dedicated control channel if there is at least one passive resource set available in the DCCH resource cache and data received from the mobile station to which the standalone dedicated control channel is being allocated, indicates that the standalone dedicated control channel will be used to perform a procedure for which no additional radio communication channel will be needed, i.e. a procedure not requiring reconfiguration of the standalone dedicated control channel to another type of channel configuration. Examples of procedures where only a standalone dedicated control channel is used when performing the procedure are Location Area update, Routing Area update and transfer of point-to-point SMS-messages.

Even though the invention in its first exemplary embodiment has been applied to a radio access network operating using the UTRAN FDD mode, the invention may of course be applied to other radio access networks such as radio access networks using the UTRAN TDD mode.

## Claims

1. A method for resource allocation in a radio access network (RAN1), the radio access network supporting a plurality of different types of radio communication channel configurations for communication with mobile stations (MS1) operating in an area served by the radio access network, the method including the steps of:
detecting (401) a need for allocating a first standalone dedicated control channel to a first mobile station (MS1);
allocating (402) resources in the radio access network (RAN1) for supporting the first standalone dedicated control channel,
**characterized in that** said allocating step includes the substep of:
automatically deciding (403), according to a predetermined rule and for at least a subset (502-505) of the resources supporting the first standalone dedicated control channel, whether said subset should be provided using a first resource set (RS1-RS3) from a pool of resource sets prereserved for supporting standalone dedicated control channels or whether said subset (502-505) should be provided using resources corresponding to the first resource set but currently available for supporting different types of radio communication channel configurations including standalone dedicated control channels,
wherein according to the predetermined rule, said subset is provided using the first resource set if there is at least one available resource set in the pool of prereserved resource sets.

2. A method according to claim 1, wherein the radio access network includes at least a first radio network control node (RNC1) and at least a first radio base station (RBS1) connected to the first radio network control node and wherein the resources supporting the first standalone dedicated control channel include resources allocated in both the first radio network control node and the first radio base station.

3. A method according to claim 2 wherein each resource set (RS1-RS3) in the pool of prereserved resource sets includes resources (502-505) in both the first radio network control node (RNC1) and the first radio base station (RBS1).

4. A method according to any one of claims 1-3, wherein each resource set (RS1-RS3) in the pool of prereserved resource sets includes digital processing resources (502-505) preconfigured to support a standalone dedicated control channel.

5. A method according to any one of claims 2-3, wherein each resource set (RS1-RS3) in the pool of prereserved resource sets includes digital processing resources (502-505) preconfigured to support a standalone dedicated control channel, each resource set includes digital processing resources in both the first radio control network node (RNC1) and the first radio base station (RBS1) and wherein for each resource set (RS1-RS3) the digital processing resources (502, 503) in the first radio network control node (RNC1) are linked to the digital processing resources (502-505) in the first radio base station (RBS1).

6. A method according to any one of claims 1-5, wherein according to the predetermined rule, said subset is provided using the first resource set if data received from the first mobile station indicates that the standalone dedicated control channel will be used to perform a procedure for which no additional radio communication channel will be needed.

7. A method according to any one of claims 1-6, wherein the radio access network is a UMTS radio access network.

8. A resource handling apparatus for use in a radio access network (NET1) supporting a plurality of different types of radio communication channel configurations for communication with mobile stations (MS1) operating in an area served by the radio access network (NET1), the resource handling apparatus including:
a resource allocating circuit (520) adapted to allocate resources in the radio access network for supporting standalone dedicated control channels,
**characterized in**
**that** the resource handling apparatus further includes means for defining in a data structure (531) a pool of resource sets (RS1-RS3) in the radio access network where each resource set included in the pool is prereserved for supporting a standalone dedicated control channel,
and **that** the resource allocating circuit (520) in response to receiving a request for allocating resources in the radio access network supporting a first standalone dedicated control channel, is further adapted to automatically decide, according to a predetermined rule and for at least a subset (502-505) of the resources supporting the first standalone dedicated control channel, whether said subset should be provided using a first resource set (RS1-RS3) from the pool of prereserved resource sets or whether said subset (502-505) should be provided using resources corresponding to the first resource set but currently available for supporting different types of radio communication channel configurations including standalone dedicated control channels,
wherein according to the predetermined rule, said subset is provided using the first resource set if there is at least one available resource set in the pool of prereserved resource sets.

9. A resource handling apparatus according to claim 8, wherein the radio access network includes at least a first radio network control node (RNC1) and at least a first radio base station (RBS1) connected to the first radio network control node (RNC1) and wherein the resources supporting the first standalone dedicated control channel include resources allocated in both the first radio network control node and the first radio base station.

10. A resource handling apparatus according to claim 9, wherein each resource set (RS1-RS3) in the pool of prereserved resource sets includes resources in both the first radio network control node and the first radio base station.

11. A resource handling apparatus according to any one of claims 8-10, wherein each resource set (RS1-RS3) in the pool of prereserved resource sets includes digital processing resources (502-505) preconfigured to support a standalone dedicated control channel.

12. A resource handling apparatus according to any one of claims 9-10, wherein each resource set (RS1-RS3) in the pool of prereserved resource sets includes digital processing resources (502-505) preconfigured to support a standalone dedicated control channel, each resource set includes digital processing resources in both the first radio control network node (RNC1) and the first radio base station (RBS1) and wherein for each resource set (RS1-RS3) the digital processing resources (502, 503) in the first radio network control node (RNC1) are linked to the digital processing resources (502-505) in the first radio base station (RBS1).

13. A resource handling apparatus according to any one of claims 8-12, wherein according to the predetermined rule, said subset is provided using the first resource set if data received from the mobile station to which the first standalone dedicated control channel is to be assigned indicates that the first standalone dedicated control channel will be used to perform a procedure for which no additional radio communication channel will be needed.

14. A radio resource handling apparatus according to any one of claims 8-13, wherein the resource allocating circuit is part of a discrete logic circuit.

15. A radio resource handling apparatus according to any one of claims 8-14, wherein the radio access network is a UMTS radio access network.

16. A radio network control node including a radio resource handling apparatus according to any one of claims 8-15.

17. A radio accesss network including a radio resource handling apparatus according to any one of claims 8-15.

## Patentansprüche

1. Verfahren für Ressourcenzuteilung in einem Funkanschlussnetz (RAN1), wobei das Funkanschlussnetz eine Vielzahl von verschiedenen Arten von Funkkommunikationskanalkonfigurationen für Kommunikation mit Mobilstationen (MS1) unterstützt, die in einem Gebiet operieren, das von dem Funkanschlussnetz versorgt wird, das Verfahren die folgenden Schritte enthaltend:
Detektieren (401) eines Erfordernisses zur Zuteilung eines ersten unabhängigen dedizierten Steuerkanals zu einer ersten Mobilstation (MS1);
Zuteilen (402) von Ressourcen in dem Funkanschlussnetz (RAN1) zur Unterstützung des ersten unabhängigen dedizierten Steuerkanals,
**dadurch gekennzeichnet, dass** der Zuteilungsschritt den folgenden Teilschritt enthält:
automatisches Entscheiden (403) nach einer vorbestimmten Regel und für mindestens eine Teilmenge (502-505) der Ressourcen, die den ersten unabhängigen dedizierten Steuerkanal unterstützen, ob diese Teilmenge unter Verwendung eines ersten Ressourcensatzes (RS1-RS3) aus einem Pool von Ressourcensätzen, die zur Unterstützung von unabhängigen dedizierten Steuerkanälen vorreserviert wurden, bereitgestellt werden sollte, oder ob diese Teilmenge (502-505) unter Verwendung von Ressourcen, die mit dem ersten Ressourcensatz korrespondieren, aber gegenwärtig zur Unterstützung von verschiedenen Arten von Funkkommunikationskanalkonfigurationen einschließlich von unabhängigen dedizierten Steuerkanälen verfügbar sind, bereitgestellt werden sollte,
wobei die Teilmenge nach der vorbestimmten Regel unter Verwendung des ersten Ressourcensatzes bereitgestellt wird, wenn mindestens ein verfügbarer Ressourcensatz in dem Pool von vorreservierten Ressourcensätzen vorhanden ist.

2. Verfahren nach Anspruch 1, wobei das Funkanschlussnetz mindestens einen ersten Funknetzsteuerknoten (RNC1) und mindestens eine erste Funkbasisstation (RBS1), die mit dem ersten Funknetzsteuerknoten verbunden ist, enthält und wobei die Ressourcen, die den ersten unabhängigen dedizierten Steuerkanal unterstützen, Ressourcen enthalten, die in sowohl dem ersten Funknetzsteuerknoten als auch der ersten Funkbasisstation zugeteilt wurden.

3. Verfahren nach Anspruch 2, wobei jeder Ressourcensatz (RSI-RS3) in dem Pool von vorreservierten Ressourcensätzen Ressourcen (502-505) in sowohl dem ersten Funknetzsteuerknoten (RNC1) als auch der ersten Funkbasisstation (RBS1) enthält.

4. Verfahren nach einem der Ansprüche 1-3, wobei jeder Ressourcensatz (RS1-RS3) in dem Pool von vorreservierten Ressourcensätzen digitale Verarbeitungsressourcen (502-505) enthält, die vorkonfiguriert sind, um einen unabhängigen dedizierten Steuerkanal zu unterstützen.

5. Verfahren nach einem der Ansprüche 2-3, wobei jeder Ressourcensatz (RS1-RS3) in dem Pool von vorreservierten Ressourcensätzen digitale Verarbeitungsressourcen (502-505) enthält, die vorkonfiguriert sind, um einen unabhängigen dedizierten Steuerkanal zu unterstützen, jeder Ressourcensatz digitale Verarbeitungsressourcen in sowohl dem ersten Funksteuernetzknoten (RNC1) als auch der ersten Funkbasisstation (RBS1) enthält und wobei die digitalen Verarbeitungsressourcen (502, 503) in dem ersten Funknetzsteuerknoten (RNC1) für jeden Ressourcensatz (RS1-RS3) mit den digitalen Verarbeitungsressourcen (502-505) in der ersten Funkbasisstation (RBS1) verknüpft sind.

6. Verfahren nach einem der Ansprüche 1-5, wobei die Teilmenge nach der vorbestimmten Regel unter Verwendung des ersten Ressourcensatzes bereitgestellt wird, wenn von der ersten Mobilstation empfangene Daten anzeigen, dass der unabhängige dedizierte Steuerkanal verwendet werden wird, um eine Prozedur durchzuführen, für die kein zusätzlicher Funkkommunikationskanal benötigt werden wird.

7. Verfahren nach einem der Ansprüche 1-6, wobei das Funkanschlussnetz ein UMTS-Funkanschlussnetz ist.

8. Ressourcenverwaltungsvorrichtung zur Verwendung in einem Funkanschlussnetz (NET1), die eine Vielzahl von verschiedenen Arten von Funkkommunikationskanalkonfigurationen für Kommunikation mit Mobilstationen (MS1) unterstützt, die in einem Gebiet operieren, das von dem Funkanschlussnetz (NET1) versorgt wird, die Ressourcenverwaltungsvorrichtung enthaltend:
eine Ressourcenzuteilungsschaltung (520), die angepasst ist, um Ressourcen in dem Funkanschlussnetz zur Unterstützung von unabhängigen dedizierten Steuerkanälen zuzuteilen,
**dadurch gekennzeichnet,**
**dass** die Ressourcenverwaltungsvorrichtung weiterhin Mittel zum Definieren in einer Datenstruktur (531) eines Pools von Ressourcensätzen (RS1-RS3) in dem Funkanschlussnetz enthält, wobei jeder in dem Pool enthaltene Ressourcensatz zur Unterstützung eines unabhängigen dedizierten Steuerkanals vorreserviert ist,
und **dass** die Ressourcenzuteilungsschaltung (520) als Reaktion auf Empfang einer Anforderung zur Zuteilung von Ressourcen in dem Funkanschlussnetz, das einen ersten unabhängigen dedizierten Steuerkanal unterstützt, weiterhin angepasst ist, um nach einer vorbestimmten Regel und für mindestens eine Teilmenge (502-505) der Ressourcen, die den ersten unabhängigen dedizierten Steuerkanal unterstützen, automatisch zu entscheiden, ob diese Teilmenge unter Verwendung eines ersten Ressourcensatzes (RS1-RS3) aus dem Pool von vorreservierten Ressourcensätzen bereitgestellt werden sollte oder ob diese Teilmenge (502-505) unter Verwendung von Ressourcen, die mit dem ersten Ressourcensatz korrespondieren, aber gegenwärtig zur Unterstützung von verschiedenen Arten von Funkkommunikationskanalkonfigurationen einschließlich von unabhängigen dedizierten Steuerkanälen verfügbar sind, bereitgestellt werden sollte,
wobei die Teilmenge nach der vorbestimmten Regel unter Verwendung des ersten Ressourcensatzes bereitgestellt wird, wenn mindestens ein verfügbarer Ressourcensatz in dem Pool von vorreservierten Ressourcensätzen vorhanden ist.

9. Ressourcenverwaltungsvorrichtung nach Anspruch 8, wobei das Funkanschlussnetz mindestens einen ersten Funknetzsteuerknoten (RNC1) und mindestens eine erste Funkbasisstation (RBS1), die mit dem ersten Funknetzsteuerknoten (RNC1) verbunden ist, enthält und wobei die Ressourcen, die den ersten unabhängigen dedizierten Steuerkanal unterstützen, Ressourcen enthalten, die in sowohl dem ersten Funknetzsteuerknoten als auch der ersten Funkbasisstation zugewiesen wurden.

10. Ressourcenverwaltungsvorrichtung nach Anspruch 9, wobei jeder Ressourcensatz (RS1-RS3) in dem Pool von vorreservierten Ressourcensätzen Ressourcen in sowohl dem ersten Funknetzsteuerknoten als auch der ersten Funkbasisstation enthält.

11. Ressourcenverwaltungsvorrichtung nach einem der Ansprüche 8-10, wobei jeder Ressourcensatz (RS1-RS3) in dem Pool von vorreservierten Ressourcensätzen digitale Verarbeitungsressourcen (502-505) enthält, die vorkonfiguriert sind, um einen unabhängigen dedizierten Steuerkanal zu unterstützen.

12. Ressourcenverwaltungsvorrichtung nach einem der Ansprüche 9-10, wobei jeder Ressourcensatz (RS1-RS3) in dem Pool von vorreservierten Ressourcensätzen digitale Verarbeitungsressourcen (502-505) enthält, die vorkonfiguriert sind, um einen unabhängigen dedizierten Steuerkanal zu unterstützen, jeder Ressourcensatz digitale Verarbeitungsressourcen in sowohl dem ersten Funksteuernetzknoten (RNC1) als auch der ersten Funkbasisstation (RBS1) enthält und wobei die digitalen Verarbeitungsressourcen (502, 503) in dem ersten Funknetzsteuerknoten (RNC1) für jeden Ressourcensatz (RS1-RS3) mit den digitalen Verarbeitungsressourcen (502-505) in der ersten Funkbasisstation (RBS1) verknüpft sind.

13. Ressourcenverwaltungsvorrichtung nach einem der Ansprüche 8-12, wobei die Teilmenge nach der vorbestimmten Regel unter Verwendung des ersten Ressourcensatzes bereitgestellt wird, wenn Daten, die von der Mobilstation empfangen wurden, der der erste unabhängige dedizierte Steuerkanal zuzuteilen ist, anzeigen, dass der erste unabhängige dedizierte Steuerkanal verwendet werden wird, um eine Prozedur durchzuführen, für die kein zusätzlicher Funkkommunikationskanal benötigt werden wird.

14. Funkressourcenverwaltungsvorrichtung nach einem der Ansprüche 8-13, wobei die Ressourcenzuteilungsschaltung Bestandteil einer diskreten Logikschaltung ist.

15. Funkressourcenverwaltungsvorrichtung nach einem der Ansprüche 8-14, wobei das Funkanschlussnetz ein UMTS-Funkanschlussnetz ist.

16. Funknetzsteuerknoten, der eine Funkressourcenverwaltungsvorrichtung nach einem der Ansprüche 8-15 enthält.

17. Funkanschlussnetz, das eine Funkressourcenverwaltungsvorrichtung nach einem der Ansprüche 8-15 enthält.

## Revendications

1. Procédé d'allocation de ressources dans un réseau d'accès radio (RAN1), le réseau d'accès radio supportant une pluralité de différents types de configurations de canal de communication radio pour la communication avec des stations mobiles (MS1) fonctionnant dans une zone desservie par le réseau d'accès radio, le procédé comprenant les étapes consistant à:
détecter (401) un besoin pour allouer un premier canal de commande dédié autonome à une première station mobile (MS1);
allouer (402) des ressources dans le réseau d'accès radio (RAN1) pour supporter le premier canal de commande dédié autonome,
**caractérisé en ce que** ladite étape d'allocation comprend la sous-étape consistant à:
décider automatiquement (403), selon une règle prédéterminée et pour au moins un sous-ensemble (502-505) des ressources supportant le premier canal de commande dédié autonome, si ledit sous-ensemble doit être pourvu à l'aide d'un premier jeu de ressources (RS1-RS3) à partir d'un groupe d'ensembles de ressources préréservées pour supporter des canaux de commande dédiés autonomes ou si ledit sous-ensemble (502-505) doit être pourvu à l'aide de ressources correspondant au premier ensemble de ressources mais actuellement disponibles pour supporter différents types de configurations de canal de communication radio comprenant des canaux de commande dédiés autonomes,
où, en fonction de la règle prédéterminée, ledit sous-ensemble est pourvu à l'aide du premier ensemble de ressources s'il y a au moins un ensemble de ressources disponible dans le groupe d'ensembles de ressources préréservées.

2. Procédé selon la revendication 1, dans lequel le réseau d'accès radio comprend au moins un premier noeud de commande de réseau radio (RNC1) et au moins une première station de base de communication radio (RSB1) connectée au premier noeud de commande de réseau radio et dans lequel les ressources supportant le premier canal de commande dédié autonome comprennent des ressources allouées dans à la fois le noeud de commande de réseau radio et la première station de base de communication radio.

3. Procédé selon la revendication 2, dans lequel chaque jeu de ressources (RSI-RS3) dans le groupe de jeux de ressources préréservées comprend des ressources (502-505) dans à la fois le premier noeud de commande de réseau radio (RNC1) et la première station de base de communication radio (RBS1).

4. Procédé selon l'une quelconque des revendications 1 à 3, dans lequel chaque jeu de ressources (RS1-RS3) dans le groupe de jeux de ressources préréservées comprend des ressources de traitement numérique (502-505) préconfigurées pour supporter un canal de commande dédié autonome.

5. Procédé selon l'une quelconque des revendications 2 et 3, dans lequel chaque jeu de ressources (RS1-RS3) dans le groupe de jeux de ressources préréservées comprend des ressources de traitement numérique (502-505) préconfigurées pour supporter un canal de commande dédié autonome, chaque jeu de ressources comprend des ressources de traitement numérique dans à la fois le premier noeud de commande de réseau radio (RNC1) et la première station de base de communication radio (RBS1), et dans lequel pour chaque jeu de ressources (RS1-RS3), les ressources de traitement numérique (502, 503) dans le premier noeud de commande de réseau radio (RNC1) sont reliées aux ressources de traitement numérique (502-505) dans la première station de base de communication radio (RBS1).

6. Procédé selon l'une quelconque des revendications 1 à 5, dans lequel, selon la règle prédéterminée, ledit sous-ensemble est pourvu à l'aide du premier jeu de ressources si des données reçues de la première station mobile indiquent que le canal de commande dédié autonome sera utilisé pour exécuter une procédure pour laquelle aucun canal de communication radio supplémentaire ne sera requis.

7. Procédé selon l'une quelconque des revendications 1 à 6, dans lequel le réseau d'accès radio est un réseau d'accès radio UMTS.

8. Appareil de gestion de ressources destiné à une utilisation dans un réseau d'accès radio (NET1) supportant une pluralité de différents types de configurations de canal de communication radio pour une communication avec des stations mobiles (MS1) fonctionnant dans une zone desservie par le réseau d'accès radio (NET1), l'appareil de gestion de ressources comprenant:
un circuit d'allocation de ressources (520) adapté pour allouer des ressources dans le réseau d'accès radio pour supporter des canaux de commande dédiés autonomes,
**caractérisé en ce que**
l'appareil de gestion de ressources comprend en outre un moyen pour définir dans une structure de données (531) un groupe de jeux de ressources (RS1-RS3) dans le réseau d'accès radio où chaque jeu de ressources compris dans le groupe est préréservé pour supporter un canal de commande dédié autonome,
et **en ce que** le circuit d'allocation de ressources (520), en réponse à la réception d'une requête pour allouer des ressources dans le réseau d'accès radio supportant un premier canal de commande dédié autonome, est en outre adapté pour automatiquement décider, selon une règle prédéterminée et pour au moins un sous-ensemble (502-505) des ressources supportant le premier canal de commande dédié autonome, si ledit sous-ensemble doit être pourvu à l'aide d'un premier jeu de ressources (RS1-RS3) du groupe de jeux de ressources préréservées ou si ledit sous-ensemble (502-505) doit être pourvu à l'aide de ressources correspondant au premier jeu de ressources mais actuellement disponibles pour supporter différents types de configurations de canal de communication radio comprenant des canaux de commande dédiés autonomes,
dans lequel, selon la règle prédéterminée, ledit sous-ensemble est pourvu à l'aide du premier jeu de ressources s'il y a au moins un jeu de ressources disponible dans le groupe de jeux de ressources préréservées.

9. Appareil de gestion de ressources selon la revendication 8, dans lequel le réseau d'accès radio comprend au moins un premier noeud de commande de réseau radio (RNC1) et au moins une première station de base de communication radio (RBS1) connectée au premier noeud de commande de réseau radio (RNC1) et dans lequel les ressources supportant le premier canal de commande dédié autonome comprennent des ressources allouées dans à la fois le noeud de commande de réseau radio et la première station de base de communication radio.

10. Appareil de gestion de ressources selon la revendication 9, dans lequel chaque jeu de ressources (RS1-RS3) dans le groupe de jeux de ressources préréservées comprend des ressources dans à la fois le premier noeud de commande de réseau radio et la première station de base de communication radio.

11. Appareil de gestion de ressources selon l'une quelconque des revendications 8 à 10, dans lequel chaque jeu de ressources (RS1-RS3) dans le groupe de jeux de ressources préréservées comprend des ressources de traitement numérique (502-505) préconfigurées pour supporter un canal de commande dédié autonome.

12. Appareil de gestion de ressources selon l'une quelconque des revendications 9 et 10, dans lequel chaque jeu de ressources (RS1-RS3) dans le groupe de jeux de ressources préréservées comprend des ressources de traitement numérique (502-505) préconfigurées pour supporter un canal de commande dédié autonome, chaque jeu de ressources comprend des ressources de traitement numérique dans à la fois le premier noeud de commande de réseau radio (RNC1) et la première station de base de communication radio (RBS1), et dans lequel pour chaque jeu de ressources (RS1-RS3), les ressources de traitement numérique (502, 503) dans le premier noeud de commande de réseau radio (RNC1) sont reliées aux ressources de traitement numérique (502-505) dans la première station de base de communication radio (RBS1).

13. Appareil de gestion de ressources selon l'une quelconque des revendications 8 à 12, dans lequel, selon la règle prédéterminée, ledit sous-ensemble est pourvu à l'aide du premier jeu de ressources si des données reçues de la station mobile, à laquelle le premier canal de commande dédié autonome doit être affecté, indiquent que le premier canal de commande dédié autonome sera utilisé pour exécuter une procédure pour laquelle aucun canal de communication radio supplémentaire ne sera requis.

14. Appareil de gestion de ressources de communication radio selon l'une quelconque des revendications 8 à 13, dans lequel le circuit d'allocation de ressources fait partie d'un circuit à logique discrète.

15. Appareil de gestion de ressources de communication radio selon l'une quelconque des revendications 8 à 14, dans lequel le réseau d'accès radio est un réseau d'accès radio UMTS.

16. Noeud de commande de réseau radio comprenant un appareil de gestion de ressources de communication radio selon l'une quelconque des revendications 8 à 15.

17. Réseau d'accès radio comprenant un appareil de gestion de ressources de communication radio selon l'une quelconque des revendications 8 à 15.
